# EUROPÄISCHE PATENTSCHRIFT

(11) **EP 2 300 768 B1**
(45) Veröffentlichungstag und Bekanntmachung des Hinweises auf die Patenterteilung: **22.02.2012**
(21) Anmeldenummer: 09777125.7
(22) Anmeldetag: 10.07.2009
(51) Int. Cl.: F27D 1/12, C21C 5/52, C21C 5/46

(54) **HALTERUNG FÜR EINEN INJEKTOR UND VERFAHREN ZU SEINEM BETRIEB**
FIXTURE FOR AN INJECTOR AND METHOD FOR THE OPERATION THEREOF
SUPPORT D'INJECTEUR ET PROCÉDÉ POUR SON UTILISATION

(30) Priorität: 10.07.2008 DE 102008032523
(43) Veröffentlichungstag der Anmeldung: 30.03.2011
(73) Patentinhaber: SMS Siemag AG, 40237 Düsseldorf (DE)
(72) Erfinder: THIEDEMANN, Uwe, 47804 Krefeld (DE); FALKENRECK, Udo, 44797 Bochum (DE); FEHLEMANN, Gereon, 40489 Düsseldorf (DE)
(74) Vertreter: Klüppel, Walter
(86) Internationale Anmeldenummer: PCT/EP2009/005046
(87) Internationale Veröffentlichungsnummer: WO 2010/003694

(56) Entgegenhaltungen:
- EP-A- 0 639 750
- EP-A- 1 884 731
- FR-A- 1 503 332
- JP-A- 61 104 008
- US-A- 4 938 456
- US-A1- 2002 001 332

## Beschreibung

Die Erfindung bezieht sich auf eine Halterung, nachfolgend auch Injektorkühlblock genannt, zur Aufnahme mindestens eines Injektors in metallurgischen Gefäßen, insbesondere in Elektrolichtbogenöfen, mit dem Medien wie Gase und/oder Feststoffe in das metallurgische Gefäß eingebracht werden, wobei mittels des Kühlmittelführungen aufweisenden Injektorkühlblocks der jeweilige Injektor über eine Öffnung geschützt an oder in der Gefäßwand des metallurgischen Gefäßes angeordnet ist. Die Erfindung bezieht sich außerdem auf ein Verfahren zum Betrieb eines solchen Injektorkühlblocks.

Grundsätzlich ist der Injektorblock ein Bauteil, welches meist aus Kupfer ist, mit einem innen liegenden Kühlwasserkanal. Durch die Wasserkühlung und die große Wärmeleitfähigkeit des Kupfers wird der Kupferwerkstoff auf einer Temperatur gehalten, die eine Zerstörung des Injektorblocks im Innenraum eines Elektrolichtbogenofens verhindert. Der Injektorblock hat eine Öffnung, durch die mit Hilfe eines Injektionssystemes Gase und/oder Feststoffe in einen Elektrolichtbogenofen eingeblasen werden können. Der Injektorblock dient dabei als Schutz für das Injektionssystem vor mechanischer Beanspruchung durch Schrott und Legierungen, starker Wärmeeinwirkung durch Strahlung der heißen Metallschmelze und des Lichtbogens und Kontakt zur schmelzflüssigen Phase. Weiterhin schließt das wassergekühlte Element als spezielle Baueinheit eines Ofenwandelements den Ofeninnenraum nach außen hin ab.

Bei vorbekannten Lösungen für Injektorblöcke oder Injektorelemente handelt es sich zumeist um gegossene Kupferwerkstücke, in welche Kühlrohre mit einem Durchmesser von ca. 70 mm eingegossen werden, die am hinteren Ende des Blocks an einem Wasserzulauf und -ablauf bzw. Wasserkreislauf angeschlossen sind. Aufgrund des großen Durchmessers der eingegossenen Kühlrohre fließt das Wasser mit geringer Strömungsgeschwindigkeit durch diese Rohre.

Dies u.a. führt zu Ablagerung in den Kühlrohren und somit zu einer starken Verminderung der Wärmeleitfähigkeit.

Vorbekannte Lösungen weisen aufgrund frühzeitiger Zerstörung durch Einwirkung thermischer Belastungen in Elektrolichtbogenöfen eine geringe Lebensdauer auf. Die gegossenen Kupfer-Kühlelemente weisen aufgrund ihrer Grobkörnigkeit eine schlechte Werkstoffhomogenität- und Festigkeit auf, es besteht die Gefahr, dass während des Gießens des Bauteils Lunker entstehen, die das Gefüge schwächen und eine Gefahr der Undichtigkeit des Bauteils darstellen. Schweißkonstruktionen, die mit konventionellen Schweißverfahren erstellt wurden, weisen aufgrund der zahlreichen Schweißnähte ebenso Inhomogenitäten auf, die den Werkstoff schwächen. Außerdem sind diese Schweißkonstruktionen unwirtschaftlich.
Bezüglich des Standes der Technik sei dazu beispielhaft auf die folgenden Druckschriften verwiesen:
Die EP 1 553 192 A2 betrifft eine Vorrichtung zur Aufnahme mindestens eines Injektors, mit dem Medien, wie Sauerstoff und/oder kohlenhaltige Brennstoffe, in einen Schmelzofen, insbesondere einen Elektrolichtbogenofen, eingebracht werden. Der jeweilige Injektor ist mittels der Aufnahmevorrichtung geschützt an oder in der Ofenwand des Schmelzofens angeordnet. Die Aufnahmevorrichtung soll dabei hinsichtlich ihrer Anordnung im Ofen variabler und die Wartung des einem hohen Verschleiss unterlegenden Bauteils einfacher werden, wozu hier vorgesehen ist, dass die Aufnahmevorrichtung mehrteilig ausgebildet ist mit einem unteren Bodenteil, einem oberen Dachteil und Seitenwänden, die separat voneinander auswechselbar sind.

Die WO 03/060169 A1 bezieht sich auf ein Verfahren zur pyrometallurgischen Behandlung von Metallen, Metallschmelzen und/oder Schlacken in einem metallurgischen Aggregat bzw. Schmelzgefäß, insbesondere zum Auf-/Einblasen von sauerstoffreichen Gasen in einem Elektrolichtbogenofen mit Hilfe einer Injektorvorrichtung, die die sauerstoffhaltigen Gase auf Überschallgeschwindigkeit beschleunigt und aus der dieser Hochgeschwindigkeitsstrahl, durch einen ihn vollständig umhüllenden gasförmigen Mantel schützt, zur pyrometallurgischen Behandlung verwendet wird. Dabei ist vorgesehen, dass der gasförmige Mantel ein Heißgas ist, das dem zentralen Hochgeschwindigkeitsstrahl so zugeführt wird, dass die Relativgeschwindigkeit und der Impulsaustausch zwischen dem zentralen Hochgeschwindigkeitsstrahl und dem Heißgasmantelstrahl minimiert wird (quasi isokinetische Zuführung). Diese Druckschrift bezieht sich außerdem auf eine Injektorvorrichtung zur pyrometallurgischen Behandlung von Metallen, Metallschmelzen und/oder Schlacken in einem metallurgischen Aggregat bzw. Schmelzgefäß, insbesondere zum Auf-/Einblasen von sauerstoffreichen Gasen und/oder kohlenstoffhaltigen Stoffen in einem Elektrolichtbogenofen, wobei die Injektorvorrichtung die sauerstoffhaltigen Gase auf Überschallgeschwindigkeit beschleunigt und in dem fallweise den sauerstoffreichen Gasen die kohlenstoffhaltigen Stoffe, vorzugsweise Partikel zugemischt werden und aus dem der Hochgeschwindigkeitsstrahl, durch einen umgebenden gasförmigen Mantel geschützt, zur pyrometallurgischen Behandlung verwendet wird, insbesondere zur Durchführung des zuvor beschriebenen Verfahrens. Dabei ist vorgesehen ein modularer Aufbau der einzelnen Baugruppen, bestehend aus einem Sauerstoffinjektor mit Injektorinnenwand und LAVAL- Düse für die Beschleunigung der sauerstoffreichen Gase, umgeben von einem Heißgasstutzen, in dessen Austrittsbereich eine Ringspaltdüse oder eine ähnliche konstruktive Lösung mit vergleichbarer Wirkung für den Durchtritt und die Beschleunigung des Heißgases angeordnet ist. Mit dieser Injektorvorrichtung bzw. dem beschriebenen Verfahren soll es möglich sein, die Länge eines frei in den Innenraum eines metallurgischen Aggregats ausströmenden sauerstoffreichen Gases und seine Eindringtiefe in eine vorhandene Schlackenschicht zu maximieren. Hierbei sollen insbesondere die Nachteile der zuvor bekannten Einrichtungen für den gemeinsamen Einsatz von Sauerstoff und Feststoff bei unterschiedlichen Betriebszuständen, nämlich hoher spezifischer Energieeinsatz, erforderliche Manipulationen bzw. mehrere Öffnungen im metallurgischen Aggregat und komplizierter Aufbau weitgehend vermieden werden. Durch das beschriebene Verfahren, den zentralen sauerstoffreichen Gasstrahl mit einem Heißgas mit möglichst geringem Impulsverlust zu ummanteln, werde eine Maximierung der Länge und der Eindringtiefe des Gasstrahls in die oberhalb der Metallschmelze befindliche Schlackenschicht zur Erzeugung einer intensiven Durchmischung und Bewegung sowie eine Verbesserung der Eindüsung partikelförmiger Feststoffe, beispielsweise Kohlenstoffträger, Stäube oder Zuschlagstoffe erreicht.

Die EP 1 884 731 A1 beschreibt ebenfalls eine Halterung für mindestens einen Injektor in oder an der Gefäßwand eines Elektrolichtbogenofens, wobei mit dem Injektor Medien wie Gase und/oder Feststoffe in das metallurgische Gefäß eingebracht werden.

Davon ausgehend liegt der Erfindung die Aufgabe zugrunde, die bekannten Verfahren bzw. Vorrichtungen unter Beibehaltung der bisherigen Vorteile in der Weise zu verbessern bzw. weiterzuentwickeln, dass die genannten Nachteile vermieden werden, wobei insbesondere die Lebensdauer und die Bauteilsicherheit des Injektorkühlblocks zur Aufnahme eines Injektionssystemes insbesondere im Elektrolichtbogenofen im Vergleich zu Vorbekanntem erhöht werden soll.

Die Aufgabe wird bezüglich der Halterung für einen Injektor erfindungsgemäß dadurch gelöst, dass die Wandstärke der Halterung zwischen ihrer Heißseite und dem Kühlmittelführungsgrund in Abhängigkeit zur Wärmebeanspruchung der Heißseite der Halterung variabel ausgebildet ist.

Die Wärmebeanspruchung ist in den Bereichen der Heißseite der Halterung am stärksten, die am nächsten zu der Oberfläche der Schmelze bzw. Schlacke liegen. Deshalb ist erfindungsgemäß vorgesehen, die Kühlkanäle, deren Grund der Oberfläche der Schmelze am nächsten liegt, mit der geringsten Wandstärke zur Heißseite hin auszubilden.

Die Halterung wird nachfolgend auch als Injektorkühlblock bezeichnet.

Dabei sind die Kühlmittelführungen des Injektorkühlblocks zur Kühlung z.B. durch Wasser als gebohrte Kühlbohrungen und/oder gefräste Kühlkanäle ausgebildet . Durch einen derart ausgebildeten Injektorkühlblock wird dabei insbesondere die Lebensdauer und die Betriebssicherheit gegenüber den vorbekannten Lösungen deutlich erhöht, wobei die mechanisch gebohrten Kühlbohrungen und/oder die gefrästen Kühlkanäle einen wesentlich kleineren Durchmesser bzw. Öffnungsquerschnitt aufweisen als die gegossenen großen Kühlbohrungen. Diese Kühlbohrungen und/oder Kühlkanäle weisen dabei bevorzugt einen Durchmesser von mindestens 8 mm oder einen schmalen Querschnitt von mindestens 50 mm² auf. Weil die Kühlkanäle gefräßt und die Kühlbohrungen gebohrt sind, haben sie im Vergleich zu gegossenen Kühlmittelführungen eine glattere Oberfläche und deshalb nur einen geringeren Strömungswiderstand, so dass sich eine hohe Wassergeschwindigkeit einstellt. Durch die Anordnung mehrerer Kühlbohrungen oder Kühlkanäle nebeneinander entsteht eine Rippenkühlung, die zu einer größeren beaufschlagten Wasserfläche führt, da die Wärme auch über die Seitenflanken abgeführt wird.

Nach einem weiteren Merkmal der vorliegenden Erfindung ist vorgesehen, dass zur Vergleichmäßigung der Kühlung um die Öffnung des Injektorkühlblocks die jeweiligen Kühlbohrungen und/oder Kühlkanäle zur Führung des Wassers in einer Richtung um die Öffnung des Injektorkühlblocks herum geführt ausgebildet sind.

Bei einer dazu alternativen Ausführungsform der vorliegenden Erfindung ist vorgesehen, dass zur Vergleichmäßigung der Kühlung um die Öffnung des Injektorkühlblocks die jeweiligen Kühlbohrungen und/oder Kühlkanäle zur Führung des Wassers in beiden Richtungen um die Öffnung des Injektorkühlblocks herum geführt ausgebildet sind. In diesem Fall muss der Zu- und Ablauf sich dann kreuzen und über zwei Ebenen geführt werden.

Es empfiehlt sich nach einem weiteren Merkmal der vorliegenden Erfindung, dass zur Veränderung der Wassergeschwindigkeit und Wasserführung in den Kühlbohrungen und/oder Kühlkanälen wenigstens ein Verdrängerelement und/oder wenigstens eine Leitplatte angeordnet ist. Dieses Verdrängerelement und/oder die Leitplatte können dabei aus metallischen Werkstoffen oder auch temperaturbeständigen Kunststoffen wie u. a. PTFE bestehen.

Bei einer Ausführungsform der vorliegenden Erfindung ist vorgesehen, dass der Injektorkühlblock eine mit wenigstens einer zwischengeschalteten Verteilerkammer versehene Anschlussverbindung für die Kühlbohrungen und/oder Kühlkanäle aufweist. Bei dieser Ausführungsform kann vorgesehen sein, dass in der Verteilerkammer zur Beibehaltung der Gießgeschwindigkeit wenigstens ein Verdrängerelement und/oder wenigstens eine Leitplatte angeordnet ist.

Nach einem weiteren Merkmal der vorliegenden Erfindung ist vorgesehen, dass die Kühlbohrungen und/oder Kühlkanäle zur Verhinderung von Ablagerungen von Innen beschichtet ausgebildet sind. Teilweise ermöglichen diese Beschichtungen auch durch ihre gegenüber dem wärmeleitenden Werkstoff geringen Wärmeleitfähigkeit die Kühlung des Blockes individuell einzustellen.

Es empfiehlt sich nach einem weiteren Merkmal der vorliegenden Erfindung, dass der Injektorkühlbock aus einem stark wärmeleitenden, warmgewalzten und/oder geschmiedeten Werkstoff wie z.B. Kupfer oder einer Kupferlegierung besteht. Es wird dadurch auf einfache Weise durch das gewalzte oder geschmiedete gut wärmeleitende Material wie u.a. Kupfer ein Werkstoff mit sehr guter Homogenität, hoher Wärmeleitfähigkeit und großer Festigkeit bereit gestellt. Dabei ist vorzugsweise zur weiteren Erhöhung der Festigkeit und Härte vorgesehen, dass Injektorkühlblock zusätzlich durch Schmieden und/oder Walzen kaltverfestigt ausgebildet ist.

Nach einem bezüglich des Injektorkühlbocks letzten Merkmal der vorliegenden Erfindung ist vorgesehen, dass der Injektorkühlblock aus zwei in einem Winkel zueinander stehenden, aus einem gemeinsamen Plattenelement gefertigten Platten besteht, wobei dieses mit Hilfe einer Biegevorrichtung entsprechend dem Winkel gebogen werden kann.

Die der Erfindung zu Grunde liegende Aufgabe wird außerdem durch das Verfahren gemäß Anspruch 10 gelöst. Bezüglich der sich dabei ergebenden Vorteile wird zur Vermeidung von Wiederholungen auf die beschriebenen Vorteile des erfindungsgemäßen Injektorkühlblocks verwiesen.

Mit dem gewalzten oder geschmiedeten gut wärmeleitenden Material wie u.a. Kupfer wird wie erwähnt ein Werkstoff mit sehr guter Homogenität, hoher Wärmeleitfähigkeit und großer Festigkeit eingesetzt und durch dass beschriebene Kühldesign und das beschriebene Fertigungsverfahren können Schwachstellen in thermisch stark beanspruchten Zonen des Injektorblocks vermieden werden. Die Kühlung des Blockes wird wesentlich verbessert und gemäß der Variation des Bohrungsdurchmessers oder des Kühlkanalquerschnitts, der Fließrichtung und der Wassergeschwindigkeit sowie dem Abstand des Bohrungs- und Kühlkanalgrundes zur Heißseite hin individuell den Temperaturenbeanspruchungen angepaßt. Die Wasserführung kann über die zu kühlende Fläche durch einen Richtungswechsel vergleichmäßigt werden. Die wasserbeaufschlagte Fläche vergrößert sich erheblich.

Weitere Vorteile und Einzelheiten der Erfindung ergeben sich aus den Unteransprüchen und aus der nachfolgenden Beschreibung, in der die in den Figuren der Zeichnung dargestellte Ausführungsform der Erfindung näher erläutert wird. Dabei sind neben den oben angeführten Kombinationen von Merkmalen auch Merkmale allein oder in anderen Kombinationen erfindungswesentlich.

Es zeigen:
- Fig. 1: eine schematische Oberansicht des erfindungsgemäßen Injektorkühlblockes in einer ersten Ausführungsform, und
- Fig. 2: eine Darstellung des erfindungsgemäßen Injektorkühlblockes gemäß der Linie II-II der Fig. 1,

Der erfindungsgemäße Injektorkühlblock, d. h. die Halterung ist generell mit 10 bezeichnet und dient zur Aufnahme mindestens eines Injektors 20 in metallurgischen Gefäßen, insbesondere in Elektrolichtbogenöfen, mit dem Medien wie Gase und/oder Feststoffe in das metallurgische Gefäß eingebracht werden, wobei mittels des Kühlmittelführungen 14, 15 aufweisenden Injektorkühlblocks 10 der jeweilige Injektor über eine Öffnung 11 geschützt an oder in der Gefäßwand 30 des metallurgischen Gefäßes angeordnet ist. Es ist dazu in den Fig. der Zeichnung der erfindungsgemäße Injektorkühlblock 10 in verschiedenen Ansichten dargestellt. Die vorliegende Erfindung bezieht sich außerdem auf ein Verfahren zum Betrieb eines solchen Injektorkühlblocks 10.

Bei dem erfindungsgemäßen Injektorkühlblock 10 ist dabei vorgesehen, dass der Injektorkühlblock 10 aus einem stark wärmeleitenden, warmgewalzten und/oder geschmiedeten Werkstoff wie z.B. Kupfer oder einer Kupferlegierung (wie z.B. CuAg, CuCrZr oder auch CuNiBe) besteht. Entsprechend ist vorgesehen, dass bei der Herstellung des Injektorkühlblocks 10 ein stark wärmeleitender Werkstoff wie z.B. Kupfer oder eine Kupferlegierung durch ein Warmwalzen und/oder Schmieden umgeformt und warmverfestigt wird. Es wird dadurch auf einfache Weise durch das gewalzte oder geschmiedete gut wärmeleitende Material wie u.a. Kupfer ein Werkstoff mit sehr guter Homogenität, hoher Wärmeleitfähigkeit und großer Festigkeit bereit gestellt. Der Injektorkühlblock 10 kann bevorzugt zusätzlich durch Schmieden und/oder Walzen kaltverfestigt ausgebildet sein.

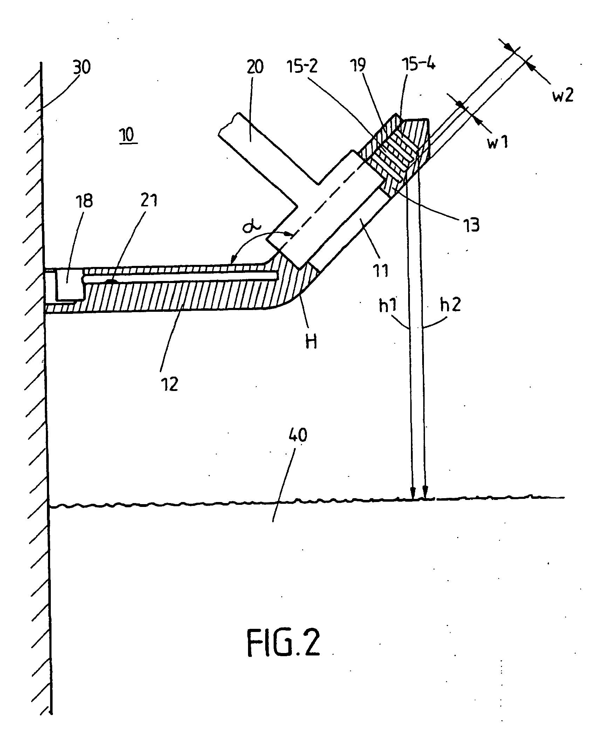

Bei der in Fig. 2 dargestellten Ausführungsform des erfindungsgemäßen Injektorkühlblocks 10 besteht dieser Injektorkühlblock 10 aus zwei in einem Winkel zueinander stehenden, aus einem gemeinsamen Plattenelement gefertigten Platten 12,13. Dieses Plattenelement kann dabei mit Hilfe einer Biegevorrichtung entsprechend einem vorgegebenen Winkel α gebogen werden.

Bei der in den Fig. dargestellten Ausführungsform weist außerdem der Injektorkühlblock 10 zur Kühlung z.B. durch Wasser Kühlbohrungen 14 auf, es können weiterhin auch zusätzlich oder alternativ Kühlkanäle 15 vorgesehen sein. Diese Kühlbohrungen 14 und/oder Kühlkanäle weisen dabei bevorzugt einen Durchmesser von mindestens 8 mm oder einen schmalen Querschnitt von mindestens 50 mm² auf, es werden dabei die Kühlkanäle gefräßt ausgeführt,so dass sich eine hohe Wassergeschwindigkeit einstellt. Durch die Anordnung von jeweils mehreren Kühlbohrungen 14 und Kühlkanälen 15 nebeneinander entsteht eine Rippenkühlung, die zu einer größeren beaufschlagten Wasserfläche führt, da die Wärme auch über die Seitenflanken abgeführt wird.

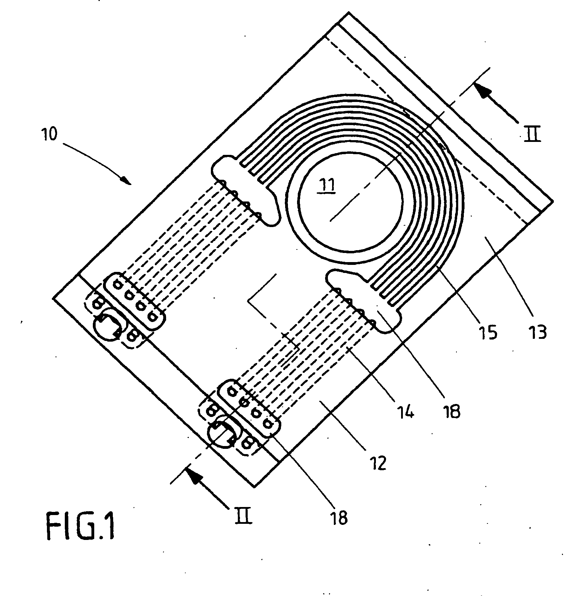

Bei der in den Fig. 1 dargestellten Ausführungsform des erfindungsgemäßen Injektorkühlblocks 10 sind zur Vergleichmäßigung der Kühlung die jeweiligen Kühlbohrungen 14 und/oder Kühlkanäle 15 um die Öffnung 11 des Injektorkühlblocks 10 herum geführt ausgebildet. Es ist auch denkbar, dass das Wasser in den benachbarten Kühlmittelführungen gleichgerichtet, im oder entgegen dem Uhrzeigersinn, oder abwechselnd in entgegengesetzten Drehrichtungen geführt ist. In letzterem Fall muss sich der Zu- und Ablauf dann kreuzen und über zwei Ebenen geführt werden.

Die Kühlkanäle werden auf der Rückseite durch eine Metallplatte 19, die auch aus Kupfer oder einer Kupferlegierung bestehen kann, geschlossen. Diese Platte wird mit Hilfe von Schrauben oder einer Schweißung wie u.a. dem Elektronenstrahlschweißen befestigt. Zwischen der Platte und dem Bauteil ist eine temperaturbeständige Dichtung eingebracht.

Es ist auch möglich, zur Veränderung der Wassergeschwindigkeit und Wasserführung in den Kühlbohrungen 14 und/oder -kanälen 15 Verdrängerelemente 21 und Leitplatten einzubringen, die aus metallischen Werkstoffen oder auch temperaturbeständigen Kunststoffen wie u.a. PTFE bestehen.

Die Verbindung der Kühlbohrungen 14 mit den Kühlkanälen 15 kann direkt oder über zwischengeschaltete Verteilerkammern 18 erfolgen. Zur Beibehaltung der Gießgeschwindigkeit in den Verteilerkammern können in diese ebenfalls Verdrängerelemente und Leitplatten eingebracht werden.

Dadurch, dass die Kühlbohrungen 14 und/oder -kanäle 15 mechanisch hergestellt werden, verfügen diese über eine wesentlich geringere Rauhigkeit als gegossene Kühlmittelführungen, wodurch die Strömungsverluste des Wassers verringert werden.

Zur Verhinderung von Ablagerungen können die Kühlbohrungen 14 und/oder - kanäle 15 auch von Innen beschichtet sein. Teilweise ermöglichen diese Beschichtungen auch durch ihre gegenüber dem wärmeleitenden Werkstoff geringe Wärmeleitfähigkeit die Kühlung des Blockes individuell einzustellen.

Figur 2 zeigt, dass die Wandstärken W der Halterung zwischen dem Grund der einzelnen Kühlkanäle und der Heißseite H der Halterung unterschiedlich sein können. Erfindungsgemäß ist diese Wandstärke entsprechend der Wärmebelastung der Heißseite H unterschiedlich. In Figur 2 ist der Kühlkanal 15-2 tiefer ausgefräst als der Kühlkanal 15-4, weil sein Kühlkanalgrund einen geringeren Abstand zur Oberfläche der Schmelze bzw. Schlacke aufweist als der Grund des Kühlkanals 15-4, dass heißt weil H1 kleiner H2 ist. Die tiefere Ausbildung des Kühlkanals 15-2 gegenüber dem Kühlkanal 15-4 bedeutet, dass die Wandstärke zwischen dem Grund des Kühlkanals und der Heißseite der Halterung kleiner ist als die Wandstärke zwischen dem Grund des Kühlkanals 15-4 und der Heißseite; das heißt W1 kleiner W2.

### Bezugszeichenliste

- 10: Halterung / Injektorkühlblock
- 11: Öffnung
- 12: erste Platte
- 13: zweite Platte
- 14: Kühlbohrung
- 15: Kühlkanäle
- 18: Verteilerkammer
- 20: Injektor
- 30: Gefäßwand
- 40: Schlacke oder Schmelze

- H: Heißseite
- W: Wandstärke / Abstand
- h₁, h₂: abstände Kühlkanalgrund / Oberfläche Schlacke bzw. Schmelze

## Patentansprüche

1. Halterung (10), auch Injektorkühlblock genannt, für mindestens einen Injektor (20) in oder an der Gefäßwand (30) eines metallurgischen Gefäßes, insbesondere eines Elektrolichtbogenofens, wobei mit dem Injektor (20) Medien wie Gase und/oder Feststoffe in das metallurgische Gefäß eingebracht werden, wobei der Injektorkühlblock umfasst:
eine Öffnung (11) zur Aufnahme des Injektors; und
Kühlmittelführungen (14, 15) zum Durchführen eines Kühlmediums zwecks Kühlung des Injektorblocks,
dadurch gekenntzeichnet,
dass die Wandstärke (W) des Injektorkühlblocks (10) zwischen der Heißseite (H) des Inlektorkühlblocks und dem Grund der Kühlmittelfühmngen (14, 15) in Abhängigkeit zur Wärmebeanspruchung der Heißseite variabel ausgebildet ist; und
dass die Kühlmittelführungen (14, 15) des Injektorkühlblocks (10) als mechanisch gebohrte Kühlbohrungen (14) und/oder als gefräste Kühlkanäle (15) ausgebildet sind.

2. Halterung (10) nach Anspruch 1,
**gekennzeichnet durch**
dass die Kühlkanäle (15) um die Öffnung (11) des Injektorkühlblocks (10) herum geführt ausgebildet sind, wobei das Kühlmedium in den Kühlmittelrührungen (15) in einer Richtung um die Öffnung (11) herum fließt oder das Kühlmedium in den parallelen Kühlmittelführungen (15) in und entgegen dem Uhrzeigersinn um die Öffnung (11) herum fließt.

3. Halterung (10) nach einem der vorangegangenen Ansprüche,
**gekennzeichnet durch**
mindestens eine Verteilerkammer (18) zur Verbindung der Kühlmitelbohrungen (14) mit den Kühlkanälen (15), wobei die Verteilerkammer (18) mehrere Kühlmittelbohrungen (14) oder mehrere Kühlkanäle (15) oder mindestens eine Kühlmittelbohrung (14) und mindestens einen Kühlkanal (15) miteinander verbindet, letzteres wenn in dem Injektor (20) sowohl eine Kühlmittelbohrung wie auch ein Kühlkanals vorhanden ist, die miteinander kommunizieren.

4. Halterung (10) nach einem der vorangegangenen Ansprüche,
**dadurch gekennzeichnet, dass**
die gefrästen Kühlkanäle (15) mit einer Metallplatte (19) abgedeckt sind.

5. Halterung (10) nach einem der vorangegangenen Ansprüche,
**dadurch gekennzeichnet, dass**
in den Kühlmittelführungen (14, 15) und/oder in der Verteilerkammer (18) wenigstens ein Verdrängerelement (21) und/oder wenigstens eine Leitplatte angeordnet ist.

6. Halterung (10) nach einem der vorangegangenen Ansprüche,
**dadurch gekennzeichnet, dass**
die Kühlmittelführungen (14, 15) zur Verhinderung von Ablagerungen von Innen beschichtet ausgebildet sind.

7. Halterung (10) nach einem der vorangegangenen Ansprüche,
**dadurch gekennzeichnet, dass**
der Halterung (10) und/oder die Metallplatte (19) aus einem stark wärmeleitenden, warmgewalzten und/oder geschmiedeten Werkstoff, wie z.B. Kupfer oder einer Kupferlegierung besteht.

8. Alterung (10) nach einem der Ansprüche 1 bis 7,
**dadurch gekennzeichnet, dass**
die Halterung (10) durch zusätzliches Schmieden und/oder Walzen kaltverfestigt ausgebildet ist.

9. Injektorkühlblock nach einem der Ansprüche 1 bis 8,
**dadurch gekennzeichnet, dass**
die Halterung (10) aus zwei in einem Winkel zueinander stehenden, aus einem gemeinsamen Plattenelement gefertigten Platten (12, 13) besteht.

10. Verfahren zum Betrieb einer Halterung (10) nach einem der Ansprüche 2 bis 9,
**dadurch gekennzeichnet, dass**
das Kühlmedium in den parallelen Kühlmittelführungen in und/oder entgegen dem Uhrzeigersinn um die Öffnung (11) herumfließend geführt wird.

11. Verfahren nach Anspruch 10,
**dadurch gekennzeichnet, dass**
die Fließgeschwindigkeit des Kühlmediums in Abhängigkeit zur Menge der abzuführenden Wärme variiert wird.

## Claims

1. Mount (10), also termed injector cooling block, for at least one injector (20) in or at the vessel wall (30) of a metallurgical vessel, particularly an electric arc furnace, wherein media such as gases and/or solids are introduced into the metallurgical vessel by the injector (20), wherein the injector cooling block comprises:
an opening (11) for reception of the injector; and
coolant guides (14, 15) for conducting a cooling medium for the purpose of cooling the injector block,
**characterised in that**
the wall thickness (W) of the injector cooling block (10) between the hot side (H) of the injector cooling block and the base of the coolant guides is constructed to be variable in dependence on the thermal loading of the hot side; and
that the coolant guides of the injector cooling block (10) are formed as mechanically drilled cooling bores (14) and/or as milled cooling channels (15).

2. Mount (10) according to claim 1, **characterised in that** the cooling channels (15) are constructed to run around the opening (11) of the injector block (10), wherein the cooling medium flows in the coolant guides (15) in a direction around the opening (11) or the cooling medium flows in the parallel coolant guides in clockwise and anticlockwise sense around the opening (11).

3. Mount (10) according to one of the preceding claims, **characterised by** at least one distributor chamber (18) for connecting the coolant bores (14) with the cooling channels (15), wherein the distributor chamber (18) connects several coolant bores (14) or several cooling channels (15) or at least one coolant bore and at least one cooling channel together, in the latter case when both a coolant bore and a cooling channel which communicate with one another are present in the injector (20).

4. Mount (10) according to any one of the preceding claims, **characterised in that** the milled cooling channels (15) are covered by a metal plate (19).

5. Mount (10) according to any one of the preceding claims, **characterised in that** at least one displacing element (21) and/or at least one guide plate is or are arranged in the coolant guides (14, 15) and/or in the distributor chamber (18).

6. Mount (10) according to any one of the preceding claims, **characterised in that** the coolant guides (14, 15) are constructed to be internally coated for prevention of deposits.

7. Mount (10) according to any one of the preceding claims, **characterised in that** the mount (10) and/or the metal plate (19) consists or consist of a highly heat-conductive, hot-rolled and/or forged material such as, for example, copper or a copper alloy.

8. Mount (10) according to any one of claims 1 to 7, **characterised in that** the mount (10) is constructed to be work-hardened by additional forging and/or rolling.

9. Injector cooling block according to any one of claims 1 to 8, **characterised in that** the mount (10) consists of two plates (12, 13) disposed at an angle to one another and made from a common plate element.

10. Method of operating a mount (10) according to any one of claims 2 to 9, **characterised in that** the cooling medium is guided in the parallel coolant guides to flow in clockwise and/or anticlockwise sense around the opening (11).

11. Method according to claim 10, **characterised in that** the flow speed of the cooling medium is varied in dependence on the amount of heat to be dissipated.

## Revendications

1. Support (10), également dénommé bloc refroidisseur d'injecteur, pour au moins un injecteur (20) dans ou sur une paroi (30) d'un récipient métallurgique, en particulier d'un four à arc électrique, dans lequel des milieux tels que des gaz et/ou des matières solides sont introduits avec l'injecteur (20) dans le récipient métallurgique, ledit bloc refroidisseur d'injecteur comprenant :
une ouverture (11) pour recevoir l'injecteur; et
des guidages pour agent de refroidissement (14, 15) pour faire passer un agent de refroidissement dans le but du refroidissement du bloc d'injecteur,
**caractérisé en ce que**
l'épaisseur de paroi (W) du bloc refroidisseur d'injecteur (10) entre le côté chaud (H) du bloc refroidisseur d'injecteur et le fond des guidages (14, 15) pour agent de refroidissement est choisie de manière variable en fonction de la sollicitation thermique du côté chaud ; et
**en ce que** les guidages pour agent de refroidissement (14, 15) du bloc refroidisseur d'injecteur (10) sont réalisés sous forme de perçages de refroidissement (14) percés par voie mécanique et/ou sous forme de canaux de refroidissement (15) fraisés.

2. Support (10) selon la revendication 1,
**caractérisé en ce que** les canaux de refroidissement (15) sont réalisés de manière guidée tout autour de l'ouverture (11) du bloc refroidisseur d'injecteur (10), l'agent de refroidissement s'écoulant dans les guidages pour agent de refroidissement (15) dans une direction tout autour de l'ouverture (11), ou bien l'agent de refroidissement s'écoulant tout autour de l'ouverture dans le sens des aiguilles d'une montre et en sens inverse dans les guidages parallèles pour agent de refroidissement (15).

3. Support (10) selon l'une des revendications précédentes,
**caractérisé par** au moins une chambre de répartition (18) pour la liaison des perçages (14) pour agent de refroidissement avec les canaux de refroidissement (15), ladite chambre de répartition (18) reliant plusieurs perçages (14) pour agent de refroidissement ou plusieurs canaux de refroidissement (15) ou au moins un perçage pour agent de refroidissement (14) et au moins un canal de refroidissement (15) les uns avec les autres, dans le dernier cas s'il existe dans l'injecteur (20) aussi bien un perçage pour agent de refroidissement qu'un canal de refroidissement qui communiquent l'un avec l'autre.

4. Support (10) selon l'une des revendications précédentes,
**caractérisé en ce que** les canaux de refroidissement fraisés (15) sont recouverts avec une plaque métallique (19).

5. Support (10) selon l'une des revendications précédentes,
**caractérisé en ce qu'**au moins un élément de refoulement (21) et/ou au moins une carte à circuits imprimés est agencé(e) dans les guidages pour agent de refroidissement (14, 15) et/ou dans la chambre de répartition (18).

6. Support (10) selon l'une des revendications précédentes,
**caractérisé en ce que** les guidages pour agent de refroidissement (14, 15) sont réalisés de manière revêtue pour empêcher des formations de dépôts depuis l'intérieur.

7. Support (10) selon l'une des revendications précédentes,
**caractérisé en ce que** le support (10) et/ou la plaque métallique (19) est en un matériau fortement thermoconducteur, laminé à chaud et/ou forgé, comme par exemple du cuivre ou un alliage de cuivre.

8. Support (10) selon l'une des revendications 1 à 7,
**caractérisé en ce que** le support (10) est réalisé de manière renforcée à froid par forgeage et/ou laminage additionnel.

9. Bloc refroidisseur d'injecteur selon l'une des revendications 1 à 8,
**caractérisé en ce que** le support (10) est constitué de deux plaques (12, 13), disposées sous un angle l'une par rapport à l'autre, réalisées à partir d'un élément en plaque commun.

10. Procédé pour l'utilisation d'un support (10) selon l'une des revendications 2 à 9,
**caractérisé en ce que** l'agent de refroidissement est mené de manière à s'écouler tout autour de l'ouverture (11) dans le sens des aiguilles d'une montre et/ou en sens contraire dans les guidages parallèles pour agent de refroidissement.

11. Procédé selon la revendication 10,
**caractérisé en ce que** la vitesse d'écoulement de l'agent de refroidissement est variée en fonction de la quantité de chaleur à évacuer.
